# EUROPEAN PATENT APPLICATION

(11) **EP 1 911 734 A1**
(43) Date of publication of application: **16.04.2008**
(21) Application number: 06255162.7
(22) Date of filing: 06.10.2006
(51) Int. Cl.: C07C 1/22, C07C 1/24, C10G 3/00

(54) **Process for hydrogenation of carboxylic acids and derivatives to hydrocarbons**

(71) Applicant: BP OIL INTERNATIONAL LIMITED, Sunbury-on-Thames TW16 7BP (GB)
(72) Inventor: The designation of the inventor has not yet been filed
(74) Representative: De Kezel, Eric

(57) **Abstract**

A process for hydrogenating a carboxylic acid or derivative thereof comprising feeding a carboxylic acid or derivative thereof and hydrogen to a reactor, maintaining conditions therein such that hydrogen reacts with the carboxylic acid and/or derivative thereof to a product stream comprising one or more hydrocarbons and one or more oxides of carbon, feeding the product stream to a flash separator, wherein a vapour fraction comprising the one or more oxides of carbon is separated form a liquid fraction comprising the one or more hydrocarbons, wherein the concentration of carbon oxides in the flash separator is at or below a predetermined value.

## Description

This invention relates to the field of hydrogenation, more specifically to a process for the hydrogenation of a carboxylic acid and/or derivative thereof to produce one or more hydrocarbons.

It is widely believed that increased concentrations of atmospheric carbon dioxide can lead to climate change through global warming effects. The burning of fossil fuels is thought to be chiefly responsible for such atmospheric increases, and governments are beginning to set targets for regulating or reducing anthropogenic carbon dioxide emissions in an attempt to mitigate and reduce such emissions.

Liquid fuels, such as gasoline, liquefied petroleum gas (LPG), diesel and aviation fuels, are major sources of atmospheric carbon dioxide emissions. In the main, they are derived from fossil fuels such as crude oil, natural gas and coal. Natural gas and coal, for example, can be converted to syngas through processes such as steam reforming or partial oxidation in which the syngas is subsequently converted into liquid hydrocarbon products by Fischer Tropsch synthesis. Crude oil is typically distilled into various fractions based on different boiling points in a refinery, which fractions can either be used as fuels directly, optionally with a suitable polishing treatment such as hydrotreating for sulphur removal, or can be converted into hydrocarbons suitable for use as fuels through processes such as cracking or reforming. On combustion of minerally-derived fuels, they contribute to increasing carbon-dioxide concentrations in the atmosphere.

In order to mitigate against such problems and concerns, it would be desirable to use fuels that make no net contribution to atmospheric carbon dioxide concentrations. One source of so-called CO₂-neutral fuels is biomass. As biomass is ultimately produced from atmospheric carbon dioxide through photosynthesis and related processes, the carbon dioxide released on its combustion is the same as that used in its initial production.

One type of biomass-derived fuel that is now being used for motor vehicles is biodiesel. One type of biodiesel comprises a blend of regular fossil fuel-derived diesel and a biological oil (bio-oil), typically a plant oil such as rapeseed, sunflower or corn oil. However, regular combustion engines may need modification before they can be used to burn such fuels.

As an alternative, instead of being blended with existing diesel compositions, bio-oils can be hydrotreating to yield hydrocarbons that are suitable for use as a diesel fuel, or as additives to diesel fuel, as described for example in US 5,702,722. Additionally, biologically derived oils can be fed to a hydrotreater in a typical crude oil refinery as a co-feed with an existing refinery-derived hydrocarbon stream, such that the product comprises hydrocarbons derived both from refinery sources and biomass sources, as described by Baldauf & Balfanz in VDE Reports No 1126 (1994) pp153-168.

A problem with feeding a bio-oil to existing refinery hydrotreating reactors and processes is that the bio-oil produces a greater quantity of liberated gas than is typically liberated from a regular refinery-derived hydrocarbon stream. In particular, the concentration of carbon oxides produced in hydrotreating can be substantially higher with a bio-oil co-feed, which can create problems in the recycling of unreacted hydrogen and also in the removal of sulphur. Thus, there remains a need for a process in which bio-oils can be converted into hydrocarbon fuels more efficiently, and with lower production of oxides of carbon. It would also be desirable for such' a process to be readily retrofitted to existing refinery processes.

According to the present invention, there is provided a process for hydrogenating a carboxylic acid and/or derivative thereof comprising the steps of;
(a) Feeding hydrogen and a carboxylic acid and/or derivative thereof to a reactor;
(b) Maintaining conditions within the reactor such that hydrogen reacts with the carboxylic acid and/or derivative thereof to produce one or more hydrocarbons and one or more oxides of carbon;
(c) Removing a product stream comprising hydrogen, the one or more hydrocarbons, and the one or more oxides of carbon from the reactor;
(d) Feeding the product stream to a flash separator;
(e) Removing from the flash separator a vapour fraction comprising hydrogen and the one or more oxides of carbon and a liquid fraction comprising the one or more hydrocarbons;
characterised in that the conditions in the reactor are such that the total concentration of carbon oxides in the vapour fraction of the flash separation zone is at or below a pre-determined value.

The process of the present invention can be used to produce a hydrocarbon fuel from a carboxylic acid and/or derivative thereof. By converting the carboxylic acid and/or derivative thereof into hydrocarbons, then a fuel composition comprising hydrocarbons derived from the carboxylic acid and/or ester can be produced, for example diesel, gasoline or aviation fuel, which do not require any modifications to engines or combustion equipment.

A mixture of more than one carboxylic acid and/or derivative thereof can be used. The carboxylic acid and/or derivative thereof, or mixtures of carboxylic acids and/or derivatives thereof, is preferably chosen such that the boiling point characteristics and/or the number of carbon atoms in the hydrocarbons produced from the carboxylic acid and/or derivative thereof are in the same range as those of the target fuel. For example, diesel fuels typically comprise hydrocarbons having in the range of from 10 to 22 carbon atoms. Thus, carboxylic acids and/or derivatives thereof which produce hydrocarbons with numbers of carbon atoms in this range would be suitable. A derivative of a carboxylic acid is a compound that can liberate the corresponding carboxylic acid when hydrolysed, for example an ester or an anhydride. Included in this definition are compounds comprising more than one carboxylate group, for example di-carboxylic acids, di-esters, or di- or triglycerides. Fatty acids and/or their esters are also suitable, with general formula R¹C(O)OH and/or R¹C(O)O-R², where R¹ and R² are typically hydrocarbon chains. Examples of fatty acids and/or esters suitable for use in accordance with the present invention in the production of a diesel fuel include, for example, lauric, myristic, palmitic, stearic, linoleic, linolenic, oleic, arachidic and erucic acids and/or esters thereof, wherein R¹ comprises 11, 13, 15, 17, 17, 17, 17, 19 and 21 carbon atoms respectively. The esters may comprise R² groups with in the range of from 1 to 6 carbon atoms, for example methyl, ethyl, propyl or butyl, or alternatively the ester may be a mono-, di- or triglyceride, with general formula [R¹C(O)O]ₙC₃H₅(OH)₃₋ₙ, where n = 1, 2 or 3 for mono-, di- or tri-glycerides respectively. The fatty acids and/or esters thereof may have saturated or unsaturated hydrocarbon groups. Di- or tri-glycerides may comprise hydrocarbon chains derived from the same or different fatty acids.

In one embodiment of the invention, the carboxylic acid and/or derivative thereof is derived from biomass, being a component for example of plant or animal-derived oil or fat. Use of biologically-derived carboxylic acids and/or esters ensures that the resulting fuel composition has a lower net emission of atmospheric carbon dioxide compared to an equivalent fuel derived purely from mineral sources. Suitable biological sources of carboxylic acids and/or esters include plant-derived oils, such as rapeseed oil, peanut oil, canola oil, sunflower oil, tall oil, corn oil, soybean oil and olive oil. Animal oils or fats, such as fish oil, lard, tallow, chicken fat, or milk and milk-derived products, are also suitable sources of fatty acids and/or esters, as are oils derived from microorganisms, for example microalgae. Waste oils, such as used cooking oils can also be used.

Preferably, biological oils or fats comprising triglycerides with hydrocarbon groups having numbers of carbon atoms commensurate with hydrocarbons typically found in diesel fuel, and used. The corresponding hydrocarbons so-obtained can be used as a diesel fuel, or alternatively blended or otherwise incorporated into diesel fuel from other sources, such as mineral-derived sources.

In the process of the present invention, the carboxylic acid and/or derivative thereof is decomposed into one or more hydrocarbons, together with oxides of carbon (COₓ), which are believed to derive from the carboxyl group. A product stream is removed from the reactor and fed to a flash separator, in which a vapour fraction comprising volatile components such as unreacted hydrogen and COₓ are removed from a liquid fraction comprising the one or more hydrocarbons. In order to recycle unreacted hydrogen, and improve the hydrogen efficiency of the process, the COₓ needs to be separated from the hydrogen. This is typically difficult and complex to achieve. It has now been found that by controlling the reaction conditions, the quantity of COₓ produced in the process can be controlled.

Without being bound by any theory, it is believed that there are a variety of reaction pathways by which a carboxylic acid and/or derivative thereof can decompose to produce a hydrocarbon. Another term for this is deoxygenation. To take an example, for a fatty acid triglyceride, one deoxygenation pathway is illustrated in equation I, and involves decarboxylation of the triglyceride to produce carbon dioxide.

(R-C(O)-O)₃-C₃H₅ + 3 H₂ → 3RH + 3 CO₂ + C₃H₈ I

An alternative pathway involves hydrogenation of the carboxyl group, in which oxygen is removed from the molecule as water, according to equation II.

(R-C(O)-O)₃-C₃H₅ + 12 H₂ → 3 RCH₃ + C₃H₈ + 6 H₂O II

Other reactions that are thought to occur in the reactor are the reduction of CO₂ to carbon monoxide and methane, according to reactions III and IV.

CO₂ + H₂ → CO + H₂O III

CO + 3H₂ → CH₄ + H₂O IV

In one embodiment of the invention, the hydrogen pressure is regulated to control the COₓ concentration in the vapour fraction of the flash separator. By increasing the hydrogen partial pressure then the formation of COₓ is hindered, by increasing the extent of deoxygenation by decarboxylation via equation I and/or by increasing the rate of reduction of CO₂ and CO by equations III and IV.

Additionally, or alternatively, decreasing the molar ratio of carboxylic acid and/or derivative thereof compared to hydrogen also results in lower COₓ concentrations in the flash separator vapour fraction.

Increasing the reactor temperature can also result in lower COₓ concentrations in the flash separator. Furthermore, at higher temperatures, the ratio of carbon dioxide to carbon monoxide in the vapour fraction tends to be lower.

Therefore, the COₓ concentrations in the vapour fraction of the flash separator can be maintained at below a pre-determined concentration by varying one or more of the reaction temperature, the hydrogen partial pressure in the reactor, and the mole ratio of the carboxylic acid and/or derivative thereof to hydrogen in the reactor.

In a preferred embodiment of the present invention, the pre-determined concentration of COₓ in the vapour fraction of the flash separator is 1 wt% or below, such as 0.1wt% or below. Preferably, the concentration is 500ppm or below, such as 100ppm or below. Although low COₓ concentrations are achievable, they may not be completely eliminated, and may still be present at concentrations of 0.1ppm or above. The process of the present invention can be used in the co-hydrogenation of a carboxylic acid and/or derivative thereof with a hydrocarbon-containing stream. Hydrocarbon-containing streams, such as those produced in a crude oil refinery, are typically hydrogenated by processes such as hydrotreating or hydrocracking to remove heteroatom-containing compounds, such as nitrogen or sulphur-containing compounds, which can otherwise cause harmful emissions when a fuel is combusted.

The concentration of COₓ in the vapour fraction can be determined by various techniques, for example chromatographic techniques such as gas chromatography, or by optical techniques such as infrared or nearinfrared spectroscopy. These can optionally be used in an on-line configuration.

Hydrotreating or hydrocracking is typically carried out at temperatures in the range of from 200 to 430°C and pressures in the range of from 20 to 200 bara (2 to 20 MPa). The severity of the conditions depends on the nature of the hydrocarbon-containing process stream being fed to the reactor, and the nature of the desired fuel product. In a preferred embodiment, hydrotreating conditions are employed, in which reaction temperatures in the range of from 200 to 410°C are maintained, preferably in the range of from 320°C to 410°C, and typical reaction pressures in the range of from 20 to 200 bara (2 to 20 MPa) preferably from 50 to 200 bara (5 to 20 MPa) are maintained. Conditions are preferably maintained in the reactor such that almost complete conversion of the carboxylic acid and/or derivative thereof is achieved, for example greater than 90wt% conversion, preferably greater than 95% conversion.

The hydrogenation reaction in the reactor may be catalysed or uncatalysed, preferably catalysed. Suitable catalysts include those comprising one or more of Pd, Pt, Ni, Ru, Cu, Co, Cr, Mo and W, for example catalysts comprising Ni or Co in combination with Mo. The catalyst is typically supported on a support such as zirconia, titania or gamma-alumina, preferably gamma alumina. Such catalysts are suitable for both hydrotreating and hydrocracking, depending on the reaction conditions.

It is preferred that the process operates under conditions typically used for hydrotreating, in which sulphur-containing compounds are hydrogenated to produce hydrogen sulphide, which is removed from the resulting hydrocarbon-containing product stream in the flash separator. Hydrotreating conditions are preferred over harsher conditions, as used for example in hydrocracking, as less cracking of the one or more hydrocarbons derived from the carboxylic acid and or ester thereof tends to occur.

In hydrotreating processes, for example as used in a crude oil refinery for removing sulphur compounds from a diesel fuel precursor stream, sulphur compounds, such as mercaptans, thiophenes, benzothiophenes and sulphides are hydrogenated to form hydrogen sulphide, which separates from the liquid hydrocarbons derived from the process via the vapour fraction of the flash separator. Typically, the H₂S is stripped from the vapour fraction using a liquid amine, and unreacted hydrogen is recycled back to the reactor. When no carboxylic acid and/or derivative thereof is present in the feed to the hydrotreater, little or no COₓ is produced. However, when there is carboxylic acid and/or ester present, any COₓ formed, in particular carbon dioxide, also dissolves in the amine together with the H₂S. This reduces absorption capacity of the amine for H₂S, which increases the cost of the amine and its regeneration. It also reduces the efficiency of a process used to convert H₂S recovered from the amine into elemental sulphur. A further disadvantage of the presence of COₓ is.that.it can build up in the recycle gas, and requires a purge to prevent it building up in the reactor. The purge stream will inevitably also contain hydrogen, which lowers the hydrogen efficiency of the process. In addition, increased concentrations of COx in the reactor can-lower hydrogen partial pressures in the reactor and increase the risk of uncontrolled methanation reactions. The presence of CO in particular can additionally allow the production of toxic nickel carbonyl when nickel-containing catalysts are used. A further consequence of minimising the formation of COₓ is that methane production is reduced, and the yields of desired fuel hydrocarbons are improved.

The liquid fraction from the flash separator is typically fed to a further separation unit, for example a fractionation or distillation unit, to separate the hydrocarbon mixture into various fuel fractions, comprising, for example, propane and butane, gasoline, diesel or kerosene.

In a preferred embodiment of the invention, the process is co-hydrotreatment of a biological fatty acid or ester thereof with a fuel hydrocarbon precursor stream derived from a crude oil refinery, which typically comprises middle distillate hydrocarbons which boil at temperatures typically in the range of from 150 to 400°C, and having carbon atom numbers typically in the range of from 10 to 22 carbon atoms. Preferably, the triglyceride is used so that minimal processing of the oil before being fed to a hydrotreater is required.

The biological fatty acid and/or ester thereof can be used to produce a fuel, such as a diesel fuel or aviation fuel. Typically, the fuel hydrocarbon precursor stream is a straight-run fraction from a crude distillation unit, although it may be mixed with hydrocarbons produced by other refinery processes, such as steam cracking and/or hydrocracking of heavier crude fractions, which produce hydrocarbons in a similar boiling range to that of the straight-run fraction.

The fuel hydrocarbon precursor stream comprises alkanes, olefins and/or one or more heteroatom-containing compounds. Typically, the heteroatom-containing compounds are sulphur-containing compounds such as sulphides, thiophenes, benzothiophenes and mercaptans. The sulphur content of the fuel hydrocarbon precursor stream is typically 200ppm or more, such as 0.1 % by weight or more, for example in the range of from 0.2 to 2% by weight, expressed as elemental sulphur. Olefins may be present at typically at concentrations above 0.01wt%, and may be present at concentrations up to 20% by weight, for example up to 10% by weight or up to 5% by weight. Other possible constituents of the first hydrogen-containing product stream include aromatic compounds, such as naphthenes. The fuel hydrocarbon precursor stream is preferably derived from a straight run crude oil refinery stream that is suitable for producing diesel fuel and/or kerosene, preferably diesel fuel.

Sulphur concentrations remaining in the hydrocarbon-containing liquid fraction of the flash separator are typically less than 200ppm expressed as elemental sulphur. Furthermore, olefins concentrations are typically lower than 1wt%, for example 0.1wt% or less. The liquid fraction comprises hydrocarbons resulting from the hydrotreated fuel hydrocarbon precursor stream, and also one or more hydrocarbons resulting from the carboxylic acid and/or derivative thereof. Typically, the liquid fraction is subsequently fractionated to separate components into various fuel fractions.

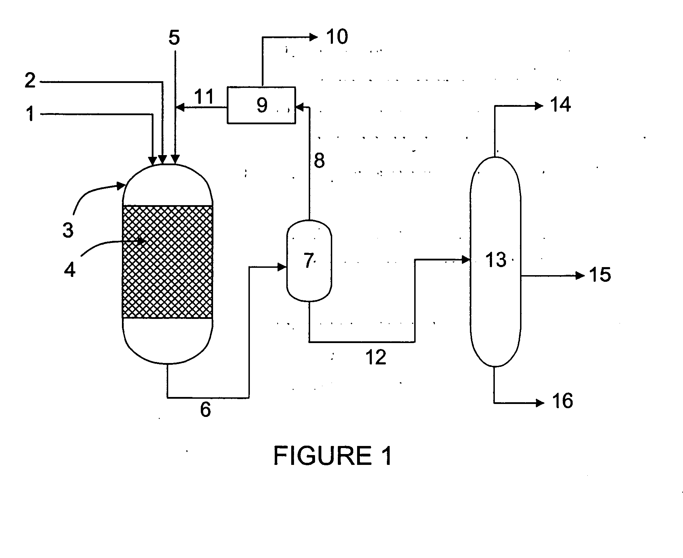

The process will now be illustrated by the following example, and with reference to Figure 1 which schematically illustrates a process in accordance with the present invention.

A biological oil or fat 1 and a middle distillate stream from a refinery 2 are fed to reactor 3 containing a fixed bed of hydrotreating catalyst 4. Hydrogen is fed to the reactor through line 5. A product stream is removed from the reactor through line 6 and fed to a flash separator 7, in which a vapour fraction 8 comprising unreacted hydrogen, light hydrocarbons such as methane and propane, water, hydrogen sulphide and COₓ, is separated from a liquid fraction 12 comprising hydrogenated middle distillate hydrocarbons and hydrocarbons derived from the biological oil or fat.

The vapour fraction is optionally fed to a hydrogen sulphide separator 9 comprising an amine which absorbs H₂S and also some carbon dioxide and water. Amine is removed for regeneration 10 and separation of hydrogen sulphide. The remainder of the vapour fraction, comprising predominantly hydrogen is recycled back to the reactor via lines 11 and 5. The liquid fraction 12 of the flash separator is fed to a fractionation column 13, wherein a fraction 14 comprising gasoline components and light hydrocarbons, and gases is removed from the top, a heavy fraction 16 comprising diesel components is removed from the base, and optionally, a kerosene fraction 15 typically suitable for use as aviation fuel is removed from an intermediate region of the column.

## Claims

1. A process for hydrogenating a carboxylic acid and/or derivative thereof comprising the steps of;
(a) Feeding hydrogen and a carboxylic acid and/or derivative thereof to a reactor;
(b) Maintaining conditions within the reactor such that hydrogen reacts with the carboxylic acid and/or derivative thereof to produce one or more hydrocarbons and one or more oxides of carbon;
(c) Removing a product stream comprising hydrogen, the one or more hydrocarbons, and the one or more oxides of carbon from the reactor;
(d) Feeding the product stream to a flash separator;
(e) Removing from the flash separator a vapour fraction comprising hydrogen and the one or more oxides of carbon and a liquid fraction comprising the one or more hydrocarbons;
**characterised in that** the conditions in the reactor are such that the total concentration of carbon oxides in the vapour fraction of the flash separation zone is at or below a pre-determined value.

2. A process as claimed in claim 1, in which the total concentration of carbon oxides in the flash separation zone is maintained at or below a pre-determined value.

3. A process as claimed in claim 1 or claim 2, in which the total concentration of carbon oxides in the vapour fraction of the flash separation zone is maintained at or below a pre-determined value by varying one or more of the reaction temperature, the partial pressure of hydrogen in the reactor, and the mole ratio of the carboxylic acid and/or derivative thereof to hydrogen in the reactor.

4. A process as claimed in any one of claims 1 to 3, in which the total concentration of carbon oxides in the vapour fraction of the flash separator is maintained at a value of 5wt% or less.

5. A process as claimed in claim 4, in which the concentration of carbon oxides is 500ppm or less.

6. A process as claimed in any one of claims 1 to 5, in which the source of carboxylic acid and/or derivative thereof is a biological oil or fat.

7. A process as claimed in claim 5 or claim 6, in which the biological oil or fat is animal-derived.

8. A process as claimed in claim 7, in which the animal-derived oil or fat is tallow.

9. A process as claimed in any one of claims 1 to 8, in which the one or more hydrocarbons are suitable for use as a diesel or aviation fuel.

10. A process as claimed in claim 9, in which the one or more hydrocarbons are suitable for use as a diesel fuel.

11. A process as claimed in any one of claims 1 to 10, in which the number of carbon atoms in the one or more hydrocarbons is in the range of from 11 to 25.

12. A process as claimed in any one of claims 1 to 11, in which a crude oil refinery-derived fuel hydrocarbon precursor stream is also fed to the reactor.

13. A process as claimed in claim 12, in which the process operates under hydrotreating conditions.

14. A process as claimed in claim 12 or clam 13, in which the process operates at a temperature of 200 to 410°C and pressure in the range of from 20 to 200 bara (2 to 20 MPa).

15. A process as claimed in any one of claims 1 to 14, in which the liquid fraction from the flash separator is fractionated to produce a diesel fuel stream.

16. A process as claimed in claim 15 in which a stream suitable for aviation fuel is also produced in the fractionation.
